Europäisches Patentamt

European Patent Office

Office européen des brevets

(11) Veröffentlichungsnummer: **0 478 900 A1**

# EUROPÄISCHE PATENTANMELDUNG

(21) Anmeldenummer: **91110524.5**

(22) Anmeldetag: **26.06.91**

(51) Int. Cl.5: **F16F 13/00**

(30) Priorität: **05.10.90 DE 4031495**

(43) Veröffentlichungstag der Anmeldung:
**08.04.92 Patentblatt 92/15**

(84) Benannte Vertragsstaaten:
**DE FR GB IT SE**

(71) Anmelder: **Firma Carl Freudenberg**
**Höhnerweg 2-4**
**W-6940 Weinheim/Bergstrasse(DE)**

(72) Erfinder: **Schmitt, Ludwig**
**Bergstrasse 11**
**W-6943 Birkenau(DE)**
Erfinder: **Ticks, Gerd-Heinz**
**Am Wetzel 10**
**W-6948 Waldmichelbach(DE)**

(54) **Hydraulisch dämpfendes Lager.**

(57) Hydraulisch dämpfendes Lager, bestehend aus
einem Innenteil (1) mit einer Achse (19), einem das
Innenteil (1) mit einem radialen Abstand umschließendes Außenteil (2) sowie einer zwischen dem Innenteil (1) und dem Außenteil (2) angeordneten Feder (20) aus elastomerem Werkstoff, wobei durch
Ausnehmungen in der Feder (20) Fluidkammern gebildet sind, die einander in Umfangsrichtung gegenüberliegend durch Dämpfungskanäle (10) verbunden
und mit Dämpfungsflüssigkeit gefüllt sind und wobei
die Fluidkammern in der Feder (20) anteilig durch
elastische Trennwände (12) und anteilig durch starre
Trennwände (12.1) in in Richtung der Achse (19)
benachbarte Teilkammern (4, 5, 6, 7) unterteilt sind.
Die Dämpfungskanäle (10) verbinden nur die Teilkammern, die einander, parallel zur Achse (19) betrachtet, an den einander entgegengesetzten Enden
des Lagers positioniert sind.

Fig.1

Die Erfindung betrifft ein hydraulisch dämpfendes Lager, bestehend aus einem Innenteil mit einer Achse, einem das Innenteil mit einem radialen Abstand umschließendes Außenteil sowie einer zwischen dem Innenteil und dem Außenteil angeordneten Feder aus elastomerem Werkstoff, wobei durch Ausnehmungen in der Feder Fluidkammern gebildet sind, die einander in Umfangsrichtung gegenüberliegend durch Dämpfungskanäle verbunden und mit Dämpfungsflüssigkeit gefüllt sind und wobei die Fluidkammern in der Feder anteilig durch elastische Trennwände und anteilig durch starre Trennwände in in Richtung der Achse benachbarte Teilkammern unterteilt sind.

Derartige Bauteile werden als schwingungsdämpfende Lagerung für Schwingungssysteme eingesetzt. Ein solches Schwingungssystem wird beispielsweise von einem Motor gebildet, der in einem Chassis befestigt ist.

Aus der JP 60 - 13 99 42 (A) ist eine schwingungsdämpfende Lagerung bekannt, die sowohl Auslenkbewegungen in axialer als auch in radialer Richtung dämpft.

Dabei wir eine Dämpfungsflüssigkeit aus Fluidkammern über Dämpfungskanäle je nach Belastungsrichtung des Lagers zwischen verschiedenen Kammern innerhalb des Lagers bewegt.

Dabei ist es allerdings nötig, daß die Dämpfungsflüssigkeit in den Verbindungskanälen zwischen den einzelnen Kammern mehrmals um 90 ° umgelenkt wird, was zu starken Verlusten in der Dämpfungswirkung führt.

Durch den komplizierten Verlauf der Verbindungskanäle ist eine aufwendige und teure Innenbearbeitung der Werkstücke unumgänglich. Außerdem ist der Aufwand zur Herstellung der Lager wegen mehrerer Vulkanisationsteile und schwierig zu fertigender Metallteile sehr groß. Ferner ist die hydraulische Dämpfung axialer Auslenkbewegungen bei dem bekannten Lager nicht befriedigend.

Der Erfindung liegt die Aufgabe zugrunde, ein im Aufbau, in der Herstellung und in der Wirkung vergleichsweise besseres Lager zu entwickeln, daß Auslenkbewegungen gelagerter Bauteile sowohl in axialer als auch in radialer Richtung dämpft und dabei hohe axiale Lasten aufnehmen kann.

Diese Aufgabe wird erfindungsgemäß dadurch gelöst, daß die Dämpfungskanäle nur die Teilkammern verbinden, die einander, parallel zur Achse betrachtet, an den einander entgegengesetzten Enden des Lagers positioniert sind. Durch die Verbindung der, parallel zur Achse betrachtet, an den einander entgegengesetzten Enden des Lagers positionierten Teilkammern über am inneren Umfang des Flanschtopfes angeordnete, relativ lange Dämpfungskanäle, ist eine gute Dämpfungswirkung bei axialen und radialen Belastungen des Lagers zu erzielen. Die Umlenkung der Dämpfungsflüssigkeit in den Dämpfungskanälen vollzieht sich allmählich ohne plötzliche Richtungsänderung, was eine harmonische Dämpfungscharakteristik bedingt.

Die Dämpfungskanäle weisen eine derartige Länge und Querschnittsfläche auf, daß die Resonanzfrequenz der während des dämpfenden Lagerbetriebes in den Dämpfungskanälen verschobenen Flüssigkeitsmasse im Zusammenwirken mit den Elastizitäten der flexiblen Trennwände im wesentlichen der Resonanzfrequenz des zu dämpfenden Teiles entspricht. Die Dämpfungsflüssigkeit, die beispielsweise aus den unteren Teilkammern wegen der Verringerung der Volumina durch die Belastung des Lagers in axialer Richtung von unten entweicht, wird in den oberen Kammern, deren Volumina sich dann vergrößern, aufgenommen.

Die in Umfangsrichtung jeweils einander gegenüberliegenden Fluidkammern können in einer übereinstimmenden Radialebene der Achse angeordnet sein.

Hierbei ist von Vorteil, daß sich zwischen den verbundenen Teilkammern relativ lange Dämpfungskanäle ergeben.

Gemäß einer vorteilhaften Ausgestaltung ist vorgesehen, daß die starren Trennwände mit wenigstens einer den elastischen Trennwänden zugewandten Klemmnut umgeben sind und daß die Klemmnut zumindest einen Vorsprung der elastischen Trennwände dichtend umgibt.

Durch die starren Trennwände läßt sich das hydraulisch dämpfende Lager einfach montieren und kostengünstig herstellen. Die starren Trennwände können außer dem hier dargestellten T-förmigen Querschnitt natürlich auch andere Querschnittsformen aufweisen. Je nach Form und Größe der starren Trennwände, die die Vorsprünge der elastischen Trennwände außenseitig in wenigstens einer Klemmnut aufnehmen, können die Vorsprünge unterschiedliche Längen und Formen aufweisen und dadurch die sich in den Teilkammern ergebende Pumpwirkung beeinflussen.

Die Dämpfungskanäle sind durch ein Außenteil und einen das Außenteil umschließenden Flanschtopf begrenzt und das Außenteil ist unverrückbar in den Flanschtopf eingefügt und hierin festgelegt.

Durch diese Anordnung von Außenteil und Flanschtopf sind die Dämpfungskanäle in besonders einfacher und wirtschaftlicher Weise zu erzeugen. Eine komplizierte und teure Innenbearbeitung von Bestandteilen des hydraulisch dämpfenden Lagers zur Herstellung der Dämpfungskanäle entfällt. Außerdem trägt diese Anordnung durch Mehrfachfunktion von Außenteil und Flanschtopf zu einem teilearmen Aufbau des Lagers bei. Das Außenteil dient zur Aufnahme der starren Trennwände und der Feder aus elastomerem Werkstoff. Der Flanschtopf sorgt für die radiale Vorspannung der starren Trennwände gegen die Feder und bildet mit der Feder einen Anschlag zur Begrenzung der Größe radialer Auslenkbewegungen. Durch die unverrückbare Einfügung und Festlegung des Außenteils im Flanschtopf ist eine einfache Abdichtung der Dämpfungskanäle zur Umgebung hin erreichbar.

Die starren Trennwände sind durch Einsatzstücke gebildet und die Einsatzstücke sind unter radialer Vorspannung zwischen den elastischen Trennwänden und dem Flanschtopf angeordnet. Die radiale Vorspannung der Einsatzstücke bewirkt besonders bei radialen Auslenkbewegungen des Lagers eine einwandfreie Abdichtung zwischen den beiden axial übereinander angeordneten Teilkammern. Außerdem wird durch die radiale Vorspannung auch eine Abdichtung zwischen den Einsatzstücken und dem Außenteil bzw. dem Flanschtopf erzielt.

Die elastischen Trennwände können an Außenrohrstegen des Außenteils anvulkanisiert sein. Die Außenrohrstege sind zur Aufnahme der elastischen Trennwände mit dem Außenrohr einstückig verbunden.

Die elastischen Trennwände sind innenseitig an beispielsweise nierenförmig ausgebildete Absätze des Innenteils anvulkanisiert. Die Absätze fixieren die Feder in ihrer Lage zum Innenteil und bewirken eine höhere Festigkeit der Trennwand im Bereich der Fixierung.

Die Feder aus elastomerem Werkstoff kann einteilig mit Anschlägen zur Begrenzung der Größe von axialen und radialen Auslenkbewegungen des Lagers versehen sein. Durch die einteilige Ausführung der Anschläge mit der Feder bleibt der einfache, teilearme Aufbau des Lagers unverändert bestehen und eine weiche Begrenzung der axialen und radialen Auslenkbewegungen ist gewährleistet.

Zwei Ausführungsbeispiele der Erfindung sind in den Zeichnungen dargestellt und werden im folgenden näher beschrieben.

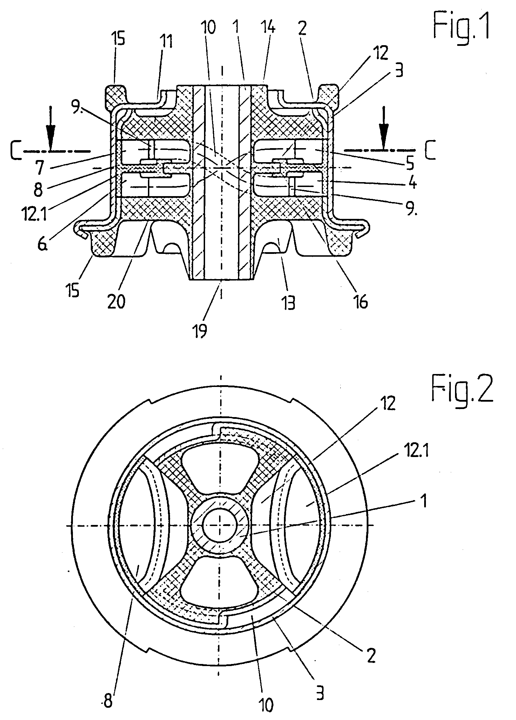

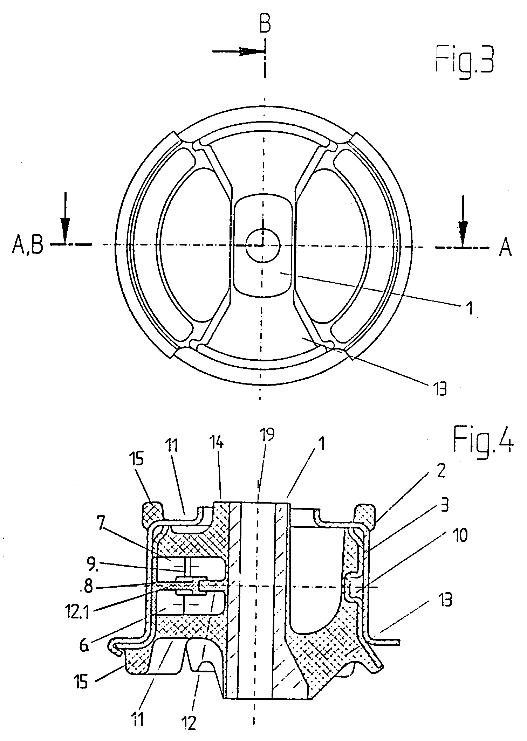

Fig. 1 zeigt den Schnitt A - A gemäß Fig. 3. Zwischen dem Innenteil 1 und dem Außenteil 2 ist eine Feder 20 aus elastomerem Werkstoff einvulkanisiert. Diese elastische Feder 20 setzt sich aus einer Blähfeder 11 und einer Tragfeder 13 zusammen. Außerdem enthält sie radial angeordnete Fluidkammern 4/5 und 6/7. Diese Fluidkammern 4/5 und 6/7 werden durch je ein Einsatzstück 8 in jeweils zwei Teilkammern 4, 5, 6, 7 unterteilt.

Die Einsatzstücke 8 werden radial in die Fluidkammern 4/5 und 6/7 eingeführt und spannen die elastische Trennwand 12 mittels einer Klemmnut 16 leicht vor. Dadurch ist eine gute Abdichtung der in axialer Richtung übereinanderliegenden Teilkammer 4, 5; 6, 7 besonders bei radialen Auslenkbewegungen der Buchse gewährleistet.

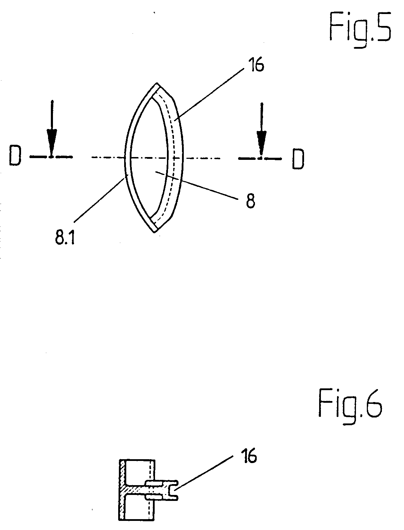

In dem Außenteil 2 sind gegenüberliegend zwei nach innen geformte Dämpfungskanäle 10 (vergleiche Fig. 4) angeordnet. Sie verbinden die Teilkammern 4, 7 und 5, 6 miteinander.

Der Flanschtopf 3 spannt die Einsatzstücke 8 radial vor und dichtet die Teilkammern 4, 5, 6, 7 gegen Fluidüberströmungen ab.

Wird das Lager beispielsweise in axialer Richtung von unten belastet, so verringert sich das Volumen in den unteren Teilkammern 4, 6; das Volumen der oberen Teilkammern 5, 7 vergrößert sich. Durch diese Änderungen der Volumina in den Teilkammern, findet über die Dämpfungskanäle 10 eine Bewegung der Dämpfungsflüssigkeit in der Gestalt statt, daß die Dämpfungsflüssigkeit in die Kammern mit vergrößertem Volumen gedrückt wird. Durch diesen Effekt wird die betriebsbedingt eingeleitete Schwingung gedämpft. Bei Entlastung des Lagers oder Lastumkehr wird dann die Dämpfungsflüssigkeit über die Dämpfungskanäle 10 durch Verkleinerung des Volumens der oberen Kammern 5, 7 wieder in die unteren Kammern 4, 6 bedrückt. Durch die überkreuzendeVerbindung der Teilkammern 4, 7 und 5, 6 ergeben sich relativlange Dämpfungskanäle 10, die in Verbindung mit einer Kanalführung ohne starke Richtungsänderungen eine gleichmäßige Dämpfungscharakteristik ohne größere Dämpfungsverluste bewirken.

Falls nötig, können Anschläge 14, 15 zur Begrenzung der Größe von axialen und radialen Auslenkbewegungen des Lagers vorgesehen werden.

Fig. 2 zeigt den Schnitt C - C gemäß Fig. 1. Im Bereich der Einsatzstücke 8 ist das Außenteil 2 ausgespart, um beim Vulkanisationsprozess die Fluidkammern ausformen zu können. Außerdem ist ein Teil der Dämpfungskanäle 10 zu sehen.

Fig. 3 zeigt die Draufsicht auf das erfindungsgemäße Lager. Das Innenteil 1 ist im Bereich der Tragfeder 13 kegelförmig gestaltet.

Fig. 4 zeigt den Schnitt A - B gemäß Fig. 3. Auch das Außenteil 2 ist, ähnlich wie das Innenteil 1 im Bereich der Tragfeder 13 kegelförmig gestaltet, um hohe axiale Lasten aufzunehmen. Der kegelförmige Querschnitt der Tragfeder 13 ist in dieser Figur gut zu erkennen.

Fig. 5 zeigt das Einsatzstück 8 als Einzelteil in einer Ansicht. Die äußere Begrenzung 8.1 des Einsatzstückes 8 liegt im montierten Zustand des Lagers unter Vorspannung am Flanschtopf 3 (vergleiche Fig. 2) an.

Fig. 6 zeigt den Schnitt D - D gemäß Fig. 5. In die Klemmnut 16 des Einsatzstückes 8 legt sich im montierten Zustand des Lagers die elastische Trennwand 12 unter Vorspannung (vergleiche Fig. 1) an.

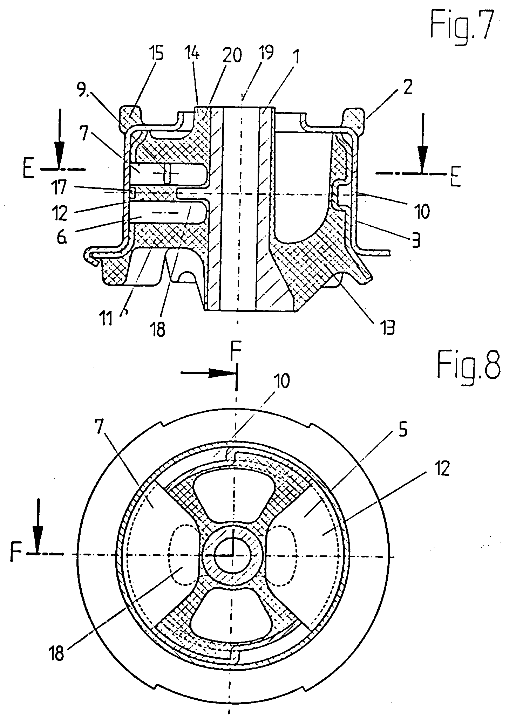

Fig. 7 und Fig. 8 zeigen eine alternative Ausführungsform bezüglich der Trennung der Kammern zu den Fig. 1 bis 6. In diesem Fall wird kein separates Einsatzstück, wie in den Fig. 1 bis 6 dargestellt, zur Unterteilung der Fluidkammern in Teilkammern verwendet, sondern die elastische Trennwand 12 der Feder 20 ist sowohl außenseitig an einem Außenrohrsteg 17 des Außenteils 2 als auch innenseitig an beispielsweise nierenförmigen Absätzen 18 des Innenteils 1 anvulkanisiert. Die Funktion und Wirkungsweise dieses hydraulisch dämpfenden Lagers ist im Vergleich zu der Ausführung, die in den Fig. 1 bis 6 dargestellt ist, gleich.

- Bezugszeichenliste zu hydraulisch dämpfendem Lager -

| | |
|---|---|
| 1. | Innenteil |
| 2. | Außenteil |
| 3. | Flanschtopf |
| 4. | Teilkammer, unten rechts |
| 5. | Teilkammer, oben rechts |
| 6. | Teilkammer, untern links |
| 7. | Teilkammer, oben links |
| 8. | Einsatzstück |
| 8.1 | Äußere Begrenzung des Einsatzstückes |
| 9. | Kanalein- / -ausgang |
| 10. | Dämpfungskanal |
| 11. | Blähfeder |
| 12. | Elastische Trennwand |
| 12.1 | Starre Trennwand |
| 13. | Tragfeder |
| 14. | Radialanschlag |
| 15. | Axialanschlag |
| 16. | Klemmnut |
| 17. | Außenrohrsteg |
| 18. | Nierenförmige Absätze |
| 19. | Achse |
| 20. | Feder aus elastomerem Werkstoff |

**Patentansprüche**

1. Hydraulische dämpfendes Lager, bestehend aus einem Innenteil (1) mit einer Achse (19), einem das Innenteil (1) mit einem radialen Abstand umschließendes Außenteil (2) sowie einer zwischen dem Innenteil (1) und dem Außenteil (2) angeordneten Feder (20) aus elastomerem Werkstoff, wobei durch Ausnehmungen in der Feder (20) Fluidkammern gebildet sind, die einander in Umfangsrichtung gegenüberliegend durch Dämpfungskanäle (10) verbunden und mit Dämpfungsflüssigkeit gefüllt sind und wobei die Fluidkammern in der Feder (20) anteilig durch elastische Trennwände (12) und anteilig durch starre Trennwände (12.1) in in Richtung der Achse (19) benachbarte Teilkammern (4, 5, 6, 7) unterteilt sind, dadurch gekennzeichnet daß die Dämpfungskanäle (10) nur die Teilkammern verbinden, die einander, parallel zur Achse (19) betrachtet, an den einander entgegengesetzten Enden des Lagers positioniert sind.

2. Hydraulisch dämpfendes Lager nach Anspruch 1, dadurch gekennzeichnet, daß die in Umfangsrichtung jeweils einander gegenüberliegenden Fluidkammern in einer übereinstimmenden Radialebene der Achse (19) angeordnet sind.

3. Hydraulisch dämpfendes Lager nach Anspruch 1, dadurch gekennzeichnet, daß die starren Trennwände (12.1) mit wenigstens einer, den elastischen Trennwänden (12) zugewandten Klemmnut (16) versehen sind und daß die Klemmnut (16) zumindest einen Vorsprung der elastischen Trennwände (12) dichtend umgibt.

4. Hydraulisch dämpfendes Lager nach Anspruch 1 - 3, dadurch gekennzeichnet, daß die Dämpfungskanäle (10) durch ein Außenteil (2) und einen das Außenteil (2) umschließenden Flanschtopf (3) begrenzt sind und daß das Außenteil (2) unverrückbar in den Flanschtopf (3) eingefügt und hierin festgelegt ist.

5. Hydraulisch dämpfendes Lager nach Anspruch 3 - 4, dadurch gekennzeichnet, daß die starren Trennwände (12.1) durch Einsatzstücke (8) gebildet sind und daß die Einsatzstücke (8) unter radialer Vorspannung zwischen den elastischen Trennwänden (12) und dem Flanschtopf (3) angeordnet sind.

6. Hydraulisch dämpfendes Lager nach Anspruch 1, dadurch gekennzeichnet, daß die elastischen Trennwände (12) an Außenrohrstege (17) des Außenteils (2) anvulkanisiert sind.

7. Hydraulisch dämpfendes Lager nach Anspruch 1 und 6, dadurch gekennzeichnet, daß die elastischen Trennwände (12) an nierenförmig ausgebildete Absätze (18) des Innenteils (1) anvulkanisiert sind.

8. Hydraulisch dämpfendes Lager nach Anspruch 1 - 7, dadurch gekennzeichnet, daß die Feder (20) aus elastomerem Werkstoff einteilig mit Anschlägen (14, 15) zur Begrenzung der Größe von axialen und radialen Auslenkbewegungen des Lagers versehen ist.

Fig.1

Fig.2

Fig.3

Fig.4

Fig.5

Fig.6

Fig.7

Fig.8

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | PATENT ABSTRACTS OF JAPAN vol. 10, no. 21 (M-449)(2078) 28. Januar 1986 & JP-A-60 179 540 ( NISSAN JIDOSHA ) 13. September 1985 * Zusammenfassung * | 1,2,7 | F16F13/00 |
| Y | | 3-5 | |
| A | | 8 | |
|  | --- | | |
| Y | FR-A-2 600 737 (TOKAI RUBBER) * Seite 10, Zeile 20 - Zeile 34; Abbildungen 1-7 * | 3-5 | |
| A | | 8 | |
|  | --- | | |
| X | FR-A-2 605 693 (HUTCHINSON) * Zusammenfassung; Ansprüche; Abbildungen * | 1,2,7 | |
|  | --- | | |
| X | US-A-4 872 651 (THORN) * Spalte 8, Zeile 7 - Spalte 9, Zeile 54; Ansprüche 8,11; Abbildung 4 * | 1,2 | |
|  | --- | | |
| A | EP-A-0 388 520 (FREUDENBERG) * Ansprüche 1,2,5,6; Abbildungen * | 1,8 | **RECHERCHIERTE SACHGEBIETE (Int. Cl.5)** |
|  | --- | | |
| A | PATENT ABSTRACTS OF JAPAN vol. 10, no. 6 (M-445)(2063) 11. Januar 1986 & JP-A-60 168 931 ( NISSAN JIDOSHA ) 2. September 1985 * Zusammenfassung * | 1,2,8 | F16F B60K |
|  | --- | | |
| A | DE-U-7 828 391 (BOGE) * Seite 13, Zeile 25 - Zeile 28; Anspruch 6; Abbildungen 4,13 * | 1,2,5 | |
|  | --- | | |
| D,A | PATENT ABSTRACTS OF JAPAN vol. 9, no. 303 (M-434)(2026) 30. November 1985 & JP-A-60 139 942 ( NISSAN JIDOSHA ) 24. Juli 1985 * Zusammenfassung * | 1,2,6 | |
|  | --- | | |
|  | -/-- | | |

Der vorliegende Recherchenbericht wurde für alle Patentansprüche erstellt

| Recherchenort | Abschlußdatum der Recherche | Prüfer |
|---|---|---|
| DEN HAAG | 17 DEZEMBER 1991 | NORDLUND J.O. |

Europäisches Patentamt

EUROPÄISCHER RECHERCHENBERICHT

Nummer der Anmeldung

EP    91 11 0524
Seite 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| A | DE-A-3 804 123 (CONTINENTAL)<br>* Spalte 2, Zeile 32 - Zeile 61; Abbildung 2 *<br><br>-----  | 1,8 | |

RECHERCHIERTE SACHGEBIETE (Int. Cl.5 )

Der vorliegende Recherchenbericht wurde für alle Patentansprüche erstellt

| Recherchenort | Abschlußdatum der Recherche | Prüfer |
|---|---|---|
| DEN HAAG | 17 DEZEMBER 1991 | NORDLUND J.O. |

EPO FORM 1503 03.82 (P0403)